(19)

**Europäisches Patentamt**
**European Patent Office**
**Office européen des brevets**

(11)  **EP 4 722 434 A1**

(12)  # EUROPEAN PATENT APPLICATION

(43) Date of publication:
08.04.2026  Bulletin 2026/15

(21) Application number: 24205088.8

(22) Date of filing: **07.10.2024**

(51) International Patent Classification (IPC):
**D04H 1/541** (2012.01)  **D04H 1/55** (2012.01)
**C02F 3/08** (2023.01)  **C02F 3/10** (2023.01)
**C02F 3/32** (2023.01)  **B01D 39/16** (2006.01)
**B01D 45/12** (2006.01)

(52) Cooperative Patent Classification (CPC):
**D04H 1/542; B01D 39/1623; D04H 1/5418;**
**D04H 1/544; D04H 1/55;** B01D 2239/0233;
B01D 2239/0622; B01D 2239/0627;
B01D 2239/064; B01D 2239/10; B01D 2239/12;
B01D 2239/1225; B01D 2239/1233; C02F 3/082;
C02F 3/103;  (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Bluewater Bio Limited**
**London NW1 5RA (GB)**

(72) Inventor: **Wiersma, Elmer**
**1131 PB Volendam (NL)**

(74) Representative: **HGF**
**HGF Limited**
**4th Floor, 1 City Square**
**Leeds LS1 2ES (GB)**

(54)  **NON-WOVEN MAT**

(57)  The invention described herein relates to non-woven mats and to methods for making same. The mat is formed from fibres that comprise a first polymeric material. The mat comprises a flange-portion (3) that is of greater density than the remaining portion of the mat and that further comprises a second thermoplastic polymeric material having a melting-point temperature that is lower than the melting-point temperature of the first polymeric material. The mats can be used in the formation of plates used in rotating biological contactors (RBCs). Other examples of applications include the formation of air filters, demisters and floating treatment wetlands.

FIGURE 8

EP 4 722 434 A1

(52) Cooperative Patent Classification (CPC): (Cont.)
C02F 3/327

## Description

The invention described herein relates to non-woven mats and to methods for making same, and, in particular, mats that require a flange portion. For example, but not restricted to, mats used in the formation of plates used in rotating biological contactors (RBCs). Other examples of applications include the formation of air filters, demisters and floating treatment wetlands.

## BACKGROUND

Rather than being formed by weaving, non-woven fabric materials are formed from entangled fibres (or filaments). The fibres may be retained in an entangled form in a number of potential ways, for example, mechanically (e.g. by virtue of the forces resisting disentanglement of the fibres or filaments), or by bonding at the cross-over surfaces between fibres (bonding may be formed thermally by melting or by the addition of a chemical such as an adhesive).

These non-woven fabric materials may be formed into sheet structures; thereby forming a non-woven mat.

The formation of non-woven mats is a relatively cheap and mechanically simple way to produce a fabric with inherent qualities that are useful in a number of applications. Such mats may be produced with relatively large pockets of space formed between the entangled fibres (i.e. voids). The presence of the voids within the mat can provide certain physical characteristics to the mat, for example: absorbance, stretch, padding, thermal insulation, sound insulation, filtration.

The solid structural content of a mat can be expressed as the volumetric solid fraction (i.e. $F_v$) which is the total volume of the solid structural material in a mat divided by the volume of the mat. The solid structural material of a mat consists of fibres and any thermal or chemical adhesive, albeit adhesive may be absent. With regard to mats consisting of a single structural material, $F_v$ may be readily determined by cutting a rectangular piece from the mat and weighing and measuring the dimensions of the piece. $F_v$ is given by:

$$F_v = M / (\rho \, L \, W \, T) \hspace{3cm} \text{(Equation 1)}$$

where $M$ (kg) is the mass of the piece of mat, $\rho$ (kg/m$^3$) is the density of the solid material and $L$, $W$ and $T$ are the length (m), width (m) and thickness (m) of the piece. Where the solid material is fibre, the density of this material is generally specified by the fibre manufacturer. Otherwise, density can be readily measure using a pyknometer, as described in ISO 3507:1999.

An example of an existing mat that can be relatively thick whilst at the same time having a relatively low $F_v$ value is a range of non-woven mats called Saranlock™, currently marketed by Asahi Kasei, a Japanese chemical company. As indicated in US Patent No. 4165281 (Niigata Engineering Company. Ltd.), a SaranLock™ mat may be used for supporting biomass in wastewater treatment systems. SaranLock™ mat is currently supplied for a wide range of applications, including biomass supports, as indicated in the Asahi Kasei website (https://www.asahi-kasei.co.jp/sarannet/en/saran lock.html). The website also indicates that SaranLock™ mats have a thickness ranging from 10 mm to 50 mm and $F_v$ values ranging from 0.03 to 0.07. SaranLock™ consists of adhesive-bonded, curled, staple fibres of a thermoplastic copolymer of which the main monomer is vinylidene chloride (VDC) and the supplementary monomer is vinyl chloride (VC). This copolymer is one of a family of polyvinylidene chloride copolymers, which are called PVDC fibres or Saran®. Staple fibres of the Saran® used to make SaranLock™ have an average straight (uncurled) length of approximately 150 mm. Given its method of manufacture, SaranLock™ may be described as an air-laid, adhesive-bonded non-woven mat.

As an example of the use of a non-woven mat, such mats can form the substance of plates for supporting biomass in rotating biological contactors (RBCs), which are machines used for treating wastewater (e.g. JP Patent No. 2007-301511, JP Utility Model (Y) No. H1-13600, JP Utility Model (Y) No. H1-16559; JP Utility Model (Y) No. H1-23594, JP Utility Model (U) No. 3064723 and Korean Patent No, 10-1019069).

As explained in US Patent No. 1811181, a RBC comprises a horizontal rotor which turns slowly in a tank, through which wastewater, receiving treatment, flows horizontally under gravity. The rotor comprises a motor connected to a central shaft to which multiple vertical plates, equidistantly spaced, are attached. The wastewater, flowing through the tank, submerges about 35% to 40% of each rotating plate. Each part of each plate is alternately wetted by the wastewater and then exposed to air above the water surface. This alternating process promotes growth of biomass on the surface of the plates, and the growing biomass removes pollutants from the wastewater.

The non-woven RBC plates, described in the above Japanese and Korean documents, are circular with an overall diameter of about 2 metres and comprise six individual, triangular, fan-shaped plate sections. The mats that make up these plate sections consist of curled fibres which are adhesive-bonded at their intersection surfaces. PVDC is normally the chosen polymer, with a denier of the fibre of 4 000, and the $F_v$ value of the mat is approximately 0.04. This is consistent with the mat being made from SaranLock™.

The triangular plate sections in the RBCs of the prior art are held in place around the rotor by 36 longitudinal tie rods, which are fixed to the rotor by circular steel plates. Six tie rods pass through six apertures made in each triangular plate section. Also, spacers pass over the tie rods, between adjacent plates, to maintain uniform longitudinal spacing between plates. The plates are approximately 50 mm thick on a pitch spacing of 100 mm.

Plates made from non-woven mats can provide a substantial advantage over more conventional plates that are used in RBCs and that are made from stiff, solid, thermoplastic sheet, which is often corrugated for improved resistance to deflection. Compared with solid plates, non-woven mat plates can support a much higher concentration of biomass per unit volume of rotor (since biomass grows on the surfaces of the fibres and within the interstitial pores between fibres). Thus, RBC plates comprising non-woven mats can be more effective at treating wastewater per unit volume of plate.

Non-woven mats however can lack sufficient rigidity for many of the uses to which they are be applied. A degree of rigidity is, for example, required for plates used in RBC units as they are urged through the wastewater being treated, to avoid sideways deflection. The above Japanese references all teach of methods of reinforcing the mat for use as plates in RBCs. The reinforcing methods increase the overall strength and fatigue resistance of the mat plates, increasing their operational lives. JP Utility Model (Y) No. H1-13600 and JP Utility Model (Y) No. H1-16559, for example, teach that stiff sheets of mesh or continuous plastic may be attached to mats to serve as strengthening superstructures. The production of superstructures attached to a non-woven mat is however relatively expensive and risks the separation of superstructure from mat.

Other reinforcing methods involve non-woven mats being reinforced by having intrinsic flanges provided within the mat. In general, a flange is commonly a projecting flat rim, collar, or rib on an object, serving to strengthen the object or to provide a means of attaching another object or maintaining position of the object. Flange portions incorporated into non-woven mats may serve various functions, which include the following:

- Flange portions increase the overall strength, stiffness and dimensional stability of mats.
- Flange portions made at the periphery of non-woven mats and at the periphery of apertures through the mats increase resistance to erosion at the edges.
- Shaped flange portions may be used as lugs and other fitments for locating non-woven mats in housings.

Flange portions may be incorporated into non-woven mats as ribs running through a mat's body (for example, Korean Patent No, 10-1019069) as well as at peripheral edges, for example forming a collar around the outer periphery of the mat or around the edge of an aperture in the mat. Flange portions are particularly effective in non-woven mats of low strength including those having comparatively low $F_v$ values.

The common way to form a flange in a SaranLock™-type non-woven mat is through the use of thermal compression. In general, the method involves heating the whole mat and then compressing the flange portion so that after cooling and releasing compression, the fibres within that portion remain in a compacted state. JP Utility Model (Y) No. H1-23594 describes the use of such a thermal compression method for forming a flange in a SaranLock-type non-woven mat around the periphery of the triangular plate sections and around the periphery of the fixing apertures, whilst Korean Patent No. 10-1019069 shows the formation of flanges in the form of ribs running through the body of the plates as well as around the peripheries.

The compression method described above works for SaranLock-type mats because Saran® has a special property in that it is highly crystalline compared with other thermoplastic materials. Thus, heating the mat under compression destroys most of the crystallinity. On cooling, the Saran® fibres recrystallize, fixing the shape of the flange portion. Heating the Saran® fibres to a point where the crystallinity is destroyed may also remove any work-hardening of the material, affecting the tensile strength of the fibres. This method of forming flange portions is not applicable to most (if not all) other thermoplastic materials.

A method of making flange portions in mats made from commodity thermoplastic fibres is to thermally compress the flange portions at or above the melting point temperature of the thermoplastic material. On cooling, the thermoplastic material sets, fixing the shape of the portion. However, the applicants have surprisingly found that this process can be problematic, because thermal compression of flange portions can overstretch the particular fibres linking the compacted flange portion to the remainder of the mat, which is not compacted. The process is most significantly problematic for relatively thick mats of comparatively low $F_v$ values (e.g. mats having a thickness of greater than 25 mm and $F_v$ values of less than 0.1).

The overstretching has been demonstrated by the inventors to weaken or even sever those linking fibres. Even if there is no direct instant breakdown in the integrity of the mat, operational lifetime of the mat within a working device is severely reduced.

The weakening of the linking fibres is a significant problem for mat plates used in RBCs. The treatment process associated with plate rotation within a RBC causes wastewater to flow in and out of non-woven plates and this two-way movement of wastewater increases the magnitude of the forces acting on the plates. Two main forces act upon non-woven plates; these are the hydraulic shear stress of the water acting on surfaces and gravity acting on the total mass of the plates containing wastewater and supported biomass. The non-woven mats must withstand these repetitive forces throughout their operational lives, and any weakness in the region between flange and body of the plate reduces the operational life of a plate. The failure of a plate occurs when the plate becomes dislodged from the position in which it is held by the gripping of the flange portions around the fixing apertures.

SaranLock™-type mats are comparatively expensive for two reasons. First, the raw material, Saran®, is expensive because 72% of its mass is chlorine, which is an expensive raw material. Second, the manufacturing of the mats, which are supplied in 2 m by 1 m rectangular sheets, is labour intensive. Additionally, environmental concerns are associated with the use of chlorinated polymers such as Saran®, particularly when these polymers are burned. A cheaper, robust alternative mat, in which strong flange portions can be formed within their structure, is required.

## BRIEF SUMMARY OF THE DISCLOSURE

The inventors of the present invention have, following extensive experimentation, identified a new structure for a non-woven mat that can provide a more robust flange, and methods for making same, when compared to mats that lose integrity during thermal compression.

Accordingly, in a first aspect of the present invention, there is provided a non-woven mat formed from fibres that comprise a first polymeric material, the mat comprises a flange-portion that is of greater density than the remaining portion of the mat and that further comprises a second polymeric material; the second polymeric material is a thermoplastic and has a melting-point temperature that is lower than the melting point temperature of the first polymeric material.

The second polymeric material may be provided throughout the mat. For example, the fibres that form the mat may be bi-component fibres comprising both first and second polymeric material. The first polymeric material may form, for example, a central thread within the fibres, and the second polymeric material a skin of the fibres from which the mat is formed. Additionally, or alternatively, the mat can be formed from two types of fibres, one comprising the first polymeric material and the second type comprising the second polymeric material.

The second polymeric material performs its function in the flange-portion, and so the second polymeric material may be substantially absent from the remaining portion of the mat. For example, less than 10, 8, 6, 4, 2, 1% by the volume of the remaining portion of the mat be formed from the second polymer, or none of the remaining portion maybe formed from the second polymer. In such a form, the remaining portion may substantially consist of the first polymeric material. For example, more than 90, 92, 94, 96, 98, 99% of the remaining portion may be formed from the first polymeric material. All of the remaining portion may be formed from the first polymeric material.

The density of the flange-portion is greater than the density of the remaining portion due to the fact that there is less void provided in the flange-portion than in the remaining portion. This may be achieved because the flange portion comprises a matrix comprising or consisting of the second polymeric material in which fibres of the first polymeric material are entrapped and secured.

The flange portion may have a $F_v$ value of more than 0.85, optionally more than 0.9, 0.95, 0.99. The flange portion may have no or substantially no void.

The flange portion may comprise a matrix comprising or consisting of the second polymeric material in which fibres of the first polymeric material are distributed. The distribution of the fibres of the first polymeric material within the second polymeric material may be uniform or randomised.

The polymeric materials may be natural or synthetic and may be plastic polymeric materials. The second polymeric material is a thermoplastic, optionally the first polymeric material is also a thermoplastic; as long as its melting-point temperature is higher than that of the second polymeric material. As the skilled person is aware, the melting temperature of a polymeric material is a temperature range over which a material transitions from a solid state to an amorphous liquid of variable viscosity. As part of the melting process, the polymeric material absorbs latent heat. Determining the melting-point temperature of any given polymer is well within the ordinary skill in the art (for example, by differential scanning calorimetry, example methods can be found in ISO 11357-3:2018, which is incorporated herein by reference). The melting point temperature of the first polymeric material may be 1°C, 2°C, 3°C, 4°C, 5°C, 10°C, 15°C or 20°C, 30°C, 40°C or more, greater than the melting-point temperature of the second polymeric material.

Some thermoplastic polymeric materials start to thermally degrade at temperatures less than their melting-point temperatures. Saran® is an example of such a polymeric material. Degradation of a polymeric material is evidenced by effects such as oxidation, chemical expulsion and scission of chains and side-groups, which may reduce strength, fatigue resistance and durability. In order to optimise the mat, such thermally degrading polymeric materials are preferably not used as the second polymeric material of the present invention. For example, the first and/or second polymeric material may not be PVDC. However, such a material may be used as a first polymeric material, provided that in the formation of the mat, the temperature is maintained to that lower than the temperature that initiates degradation for the first polymeric material. In the case of Saran®, this temperature would need to be less than 140°C.

Purely by way of an example, when the first polymeric material is a high melting point polyethylene (HMPPE), the second polymeric material may be a low melting-point polyethylene (LMPPE). The second polymer is preferably one that does not soften when in an aqueous solution, in other words, when immersed in water, the strength and/or stiffness of the second polymer is unchanged or substantially unchanged. When the first polymeric material is polypropylene (PP), the second polymeric material may be any of LMPPE, HMPPE, or combinations thereof. When the first polymeric material is polyoxymethylene (POM), the second polymeric material may be any of LMPPE, HMPPE, or combinations thereof. When the first polymeric material is TPE, the second polymeric material may be any of LMPPE, HMPPE, PP, POM, or combinations thereof. When the first polymeric material is polybutylene terephthalate (PBT), the second polymeric material may be any of LMPPE, HMPPE, PP, POM, or combinations thereof. When the first polymeric material is a polyamide (PA), such as Nylon-66, the second polymeric material may be any of LMPPE, HMPPE, PP, POM, PBT, or combinations thereof. The first polymer may be thermoplastic copolyester elastomer, whilst the second polymer may be Lumicene® Supertough 22ST05 (as supplied by TOTAL Refining and Chemicals).

As used herein, the term high melting point polyethylene (HMPPE) refers to a polyethylene having a melting point between 120°C and 140°C as determined by ISO 11357-3:2018.

As used herein, the term low melting-point polyethylene (LMPPE) refers to a polyethylene having a melting point between 100°C and 120°C as determined by ISO 11357-3:2018.

As used herein, the term high density polyethylene (HDPE) refers to a polyethylene having a density between 940 kg/m$^3$ to 970 kg/m$^3$ as determined by ISO 3507:1999.

As used herein, the term low density polyethylene (LDPE) refers to a polyethylene having a density between 915 kg/m$^3$ and 940 kg/m$^3$ as determined by ISO 3507:1999.

As will be apparent, a polyethylene can fall into both a melting point definition and a density definition. For example a polyethylene can be a HMPPE and a HDPE; a HMPPE and a LDPE; a LMPPE and a HDPE; or a LMPPE and a LDPE. More commonly a HDPE is also a HMPPE and a LDPE is also a LMPPE.

As used herein, the term thermoplastic polyester elastomer (TPE) refers to a polymer having both thermoplastic and elastomer properties. Thermoplastics are polymers that can be easily melted and formed. They are melted by heat and harden when cooled. Well-known representatives are nylon, polyester and polyolefin. These materials do not contain a crosslinked network. Elastomers are natural or synthetic polymers having elastic properties. They can deform elastically under tensile and compressive stress, but then return to their original, undeformed shape. A well-known elastomer is natural rubber and silicone rubber. TPEs combine the properties of thermoplastics and elastomers: They are materials that process like plastic but share the performance characteristics of rubber.

The flange portion may be narrower in thickness than the remaining portion of the mat. This being caused by the compression step used in the manufacture of the flange-portion. However, when relatively large amounts of the second polymeric material are used, and even after compression, excess second polymeric material may remain on the surface of the non-woven mat. Accordingly, the flange-portion may form a raised surface that extends out from the surface of the non-woven mat.

The non-woven mat may be any one from known non-woven mats, for example a spun-inline, melt-bonded non-woven mat. The fibres of such a mat comprising the first polymer may have average diameters greater than 0.3 mm. The fibres comprising the first polymer may have average lengths greater than 500 mm. The $F_v$ value of the remaining portion of the mat may be greater than 0.04, greater than 0.06, or greater than 0.08, for example 0.04 to 0.1. The $F_v$ value for the remaining portion may be 0.85 or less, 0.7 or less, 0.5 or less, 0.3 or less, or 0.1 or less,. Preferably, the $F_v$ value for the remaining portion is between 0.04 and 0.85, more preferably between 0.04 and 0.1. The remaining portion of the mat may have a thickness that is 25 mm or more.

The flange portion may be provided at the periphery of the mat. The flange portion may be provided around the periphery of an aperture in the mat. The flange portion may be provided as a rib running through the body of the mat. The flange portion may be provided as a combination of the above.

The flange portion may be a fixing fitment.

The way in which the flange portion of the mat of the present invention is formed is key to achieving the robust structure identified by the inventors.

Accordingly, in a further aspect of the present invention, there is provided a method of forming a flange in a non-woven mat, wherein the method comprises the steps of:

a. providing a non-woven mat formed from fibres that comprise a first polymeric material and from a second polymeric material;

b. heating the first and second polymeric materials to a process temperature that is higher than the melting-point temperature of the second polymeric material and lower than the melting-point temperature of the first polymeric material, and;

c. compressing a portion of the non-woven mat so that the portion of the non-woven mat forms a flange-portion.

The second polymeric material may be provided throughout the mat. For example, the fibres that form the non-woven mat may be bi-component fibres comprising both first and second polymeric material. The first polymeric material may form, for example, a central thread within the fibres, and the second polymeric material a skin of the fibres from which the mat is formed. Additionally, or alternatively, the mat can be formed from two types of fibres, one comprising the first polymeric material and the second type comprising the second polymeric material. Additionally, or alternatively, the second polymeric material may be provided over all or substantially all of the surface of the non-woven mat. As the second polymeric material performs its function in the formation of the flange-portion, the second polymeric material may be substantially absent from the remaining portion of the mat that does not form the flange-portion. For example, less than 10, 8, 6, 4, 2, 1% by the volume of the remaining portion of the mat may be formed from the second polymer, or none of the remaining portion may be formed from the second polymer. In such a form, the remaining portion may substantially consist of the first polymeric material. For example, more than 90, 92, 94, 96, 98, 99% of the remaining portion may be formed from the first polymeric material. All of the remaining portion may be formed from the first polymeric material.

Therefore, prior to step a. there may be a step a' of providing a non-woven mat comprising a first polymeric material and applying a second polymeric material to the surface of the non-woven mat. The second polymeric material may only be applied to the surface of the portion of the non-woven mat to be compressed.

The second polymeric material may be applied as a preformed sheet to the surface of the mat (e.g. either cut from plastic sheet or pre-moulded). The second polymeric material may be applied as granules to the surface of the mat, in which case, granules may fall into the mat. The second polymeric material may be applied as a molten material to the flange portion of the mat (e.g. from a heated ejector). The second polymeric material may be applied as any combination of the above manners of applications.

Optionally, the minimum amount of the second polymeric material applied to the surface of the flange portion of the mat that is sufficient to fill, after compression, the interstices within the compacted mat, which maximises the strength of the flange portion. In practice, minor cavities may remain unfilled in the flange portion, after completion of the thermal compression process, but the process ensures the $F_v$ value of the finished flange portion is greater than 0.85. The chosen compression pressure is not critical but must be sufficient to ensure the second polymeric material substantially fills the volumetric void of the compacted mat in the flange portion, without damaging the fibres of the first polymeric material in the flange portion. Generally, compression pressures are around 0.5 MPa to 2 MPa and may be indirectly related to the chosen process temperature.

The amount of second polymeric material may however exceed the minimum amount needed to fill the void in the flange portion. The methodology may be used to produce a flange portion which protrudes from the surface of the compacted mat, for use as a fixing lug, for example.

The steps of b. heating and c. compressing can be simultaneous. The step of b. heating can precede the step of c. compressing as long as the time difference is not sufficiently long for the second polymeric material to cool to the extent that it ceases to be in molten state.

Step b. of heating may be achieved by applying heat to a compression mould provided next to the flange portion using, for example, electrical elements or heated thermal oil flowing through conduits in the mould. Process temperature may be controlled by controlling mould temperature at process temperature or similar temperature. The mould may surround the portion and so step b. of heating can be applied to opposing surfaces of the non-woven mat. Double-sided heating has the advantage of maximising mould productivity.

Step b. of heating can be applied to only one surface of the non-woven mat. For one-sided heating, the second polymeric material should preferably be heated indirectly through the compacted mat, rather than directly from the opposite direction. Such single-sided indirect heating eliminates the lateral flow of liquefied second polymeric material outside the confines of the flange portion. This method of heating is optimal when seeking to produce a flange that protrudes from the surface of the mat.

The process temperature is the temperature of polymeric material in the flange portion during the thermal compression process. The process is optimally operated at a temperature that does not cause permanent impairment to the strength, fatigue resistance and durability of the first or second polymeric material.

The compression pressure used in step c. may be applied to the compressive faces of the mould to compact the mat between the faces. Maximum pressure is preferably applied, in a controlled way, after the mat's temperature has reached process temperature.

For any particular first and second polymeric materials, the selected process temperature of the thermal compression lies in a range between a lower limit value and an upper limit value. The lower limit value of process temperature must be sufficiently high to liquefy the second polymeric material so the liquid can be merged into the compacted mat during the thermal compression process. On the other hand, the upper limit value of process temperature must be sufficiently low to avoid stretching and causing permanent damage to the mat's fibres during the thermal compression process. In the absence of any relevant experimental data from test work, a good guide is to assume the upper limit value of process temperature is equal to the Vicat A50 softening temperature (ISO 306:2013) of the first polymeric material.

For example, the lower limit value of process temperature can be, or can be at least, 0°C, 5°C, 10°C, 15°C or 20°C, greater than the melting-point temperature of the second polymeric material. The upper limit value of process temperature can be at least 5°C, 10°C, 15°C or 20°C less than the melting point temperature of the first polymeric material.

When the lower limit value of process temperature is greater than the upper limit value of process temperature, the two polymeric materials cannot be used to make flange portions using the invention described herein.

Since flange portions are compacted by the thermal compression process, the liquefied second polymeric material flows only a short distance into the flange portion. Process temperatures for making flange portions can therefore be lower than those used in conventional thermal compression moulding. Selecting a comparatively high process temperature in the applicable range between the lower and upper limit values reduces the required pressure needed to urge the second polymeric material into the flange portion during the thermal compression process.

In some embodiments of the method, when the first polymeric material is HMPPE, the second polymeric material is LMPPE.

In some embodiments of the method, when the first polymeric material is PP, the second polymeric material may be any of LMPPE, HMPPE, or combinations thereof.

In some embodiments of the method, when the first polymeric material is POM, the second polymeric material may be any of LMPPE, HMPPE, or combinations thereof.

In some embodiments of the method, when the first polymeric material is TPE, the second polymeric material may be any of LMPPE, HMPPE, PP, POM, or combinations thereof.

In some embodiments of the method, when the first polymeric material is PBT, the second polymeric material may be any of LMPPE, HMPPE, PP, POM, TPE, or combinations thereof.

In some embodiments of the method, when the first polymeric material is PA, the second polymeric material may be any of LMPPE, HMPPE, PP, POM, TPE, PBT, or combinations thereof.

In some embodiments of the method, the non-woven mat is spun inline and melt bonded.

In some embodiments of the method, the fibres comprising the first polymer have average diameters greater than 0.3 mm.

In some embodiments of the method, the fibres comprising the first polymer have average lengths greater than 500 mm.

In some embodiments of the method, the volumetric solid fraction of the in the non-compressed portion of the mat is greater than 0.04 and/or less than 0.85.

In some embodiments of the method, the flange portion is formed at the periphery of the mat.

In some embodiments of the method, the flange portion is formed around the periphery of an aperture in the mat.

In some embodiments of the method, the flange portion is formed as a rib running through the body of the mat.

In some embodiments of the method, the flange portion is a fixing fitment.

Features of the first aspect of the present invention apply equally to the second aspect, for example the combinations of first and second polymeric materials used in the method may be the same as those described above as incorporated into the non-woven mat, the same fibre diameters and lengths may be used in the method as in the non-woven mat.

The method of this aspect of the present invention may be used to make any of the non-woven mats of the first aspect of the present invention.

In a further aspect of the present invention there is provided a non-woven mat made according to the second aspect of the present invention.

In a further aspect of the present invention there is provided a non-woven mat made according to earlier aspects of the present invention for use as plates in a rotating biological contactor.

In a further aspect of the present invention there is provided a non-woven mat made according to earlier aspects of the present invention for use in filters, demisters or floating treatment wetlands.

**FIGURES**

The present invention is described by way of example only and with reference to the following figures.

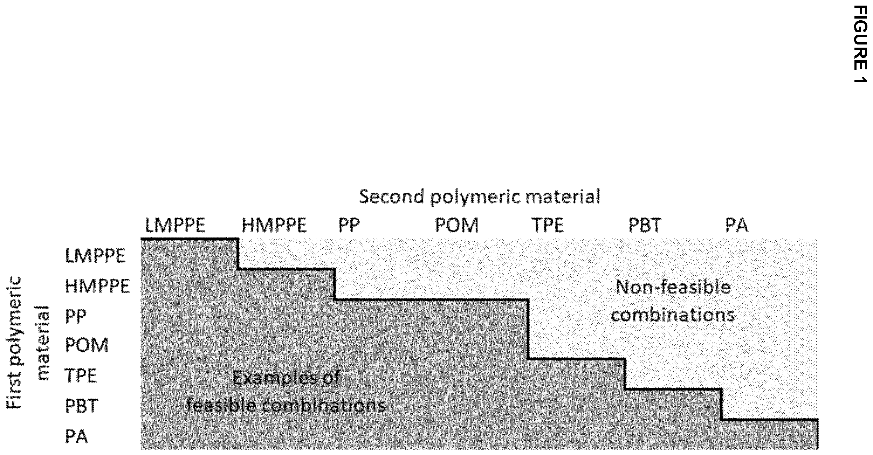

Figure 1 is a diagram showing example combinations of first and second polymeric materials; some of these combinations are feasible for use with the invention described herein. LMPPE denotes a low melting-point polyethylene and HMPPE denotes a high melting point polyethylene within the normal melting point temperature range of polyethylene (PE) types, PP denotes polypropylene, POM denotes polyoxymethylene, TPE denotes thermoplastic polyester elastomer, PBT denotes polybutylene terephthalate and PA denotes polyamide (Nylon- 66).

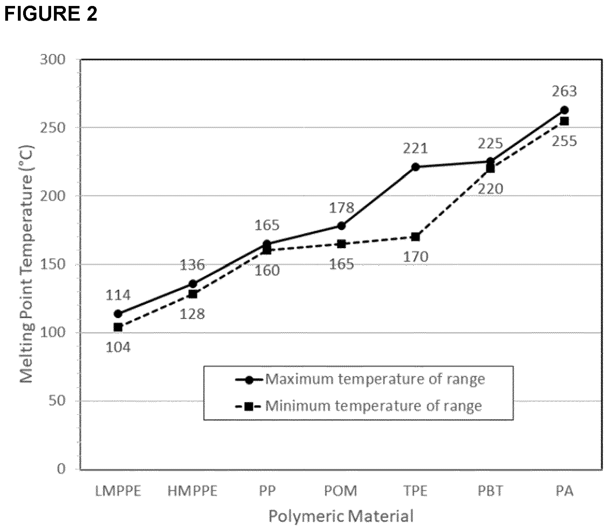

Figure 2 compares the melting-point temperatures of the polymeric materials in the example combinations as shown in Figure 1. All the first as well as the second polymeric materials, in the example combinations, are thermoplastics and none undergoes thermal degradation at a temperature less than its respective melting-point temperature. Each type of polymer material exhibits a range of melting-point temperatures, which relate to the variation in the polymeric structure of different manufactured versions of the material. Each temperature range given in Figure 2 typifies the particular material but does not necessarily cover the full range. Inspection of the chart in Figure 2 shows clear differences in the melting-point temperature ranges for the following combinations: PA-PBT, PBT-POM, TPE-PP, PP-HMPPE and HMPPE-LMPPE. For these particular combinations, a wide range of manufactured individual versions are available for the first and second polymeric materials. By comparison, the melting-point temperature ranges in the POM-PP combination are continuous. Thus, the availability of individual versions of the first and second polymeric materials for this particular combination is limited. The version of the PP must be drawn from near the bottom of its melting-point temperature range, and the version of the POM must be drawn from near the top of its melting-point temperature range.

The most cost-effective polymeric material is generally polyethylene. It has been found that LMPPE coincides generally, but not exclusively, with the established category of low-density polyethylene (LDPE). Similarly, HMPPE generally coincides with the established category of high-density polyethylene (HDPE). Density ranges of LDPE and HDPE are approximately 915 to 930 kg/m$^3$ and 940 to 970 kg/m$^3$, respectively. In the example of the spun-inline mat with flange portions, the difference between melting-point temperatures in the HMPPE-LMPPE combination is 19°C. The PBT-POM combination has the largest difference in melting-point temperatures of the first and second polymeric materials, and the combination POM-PP has the lowest difference.

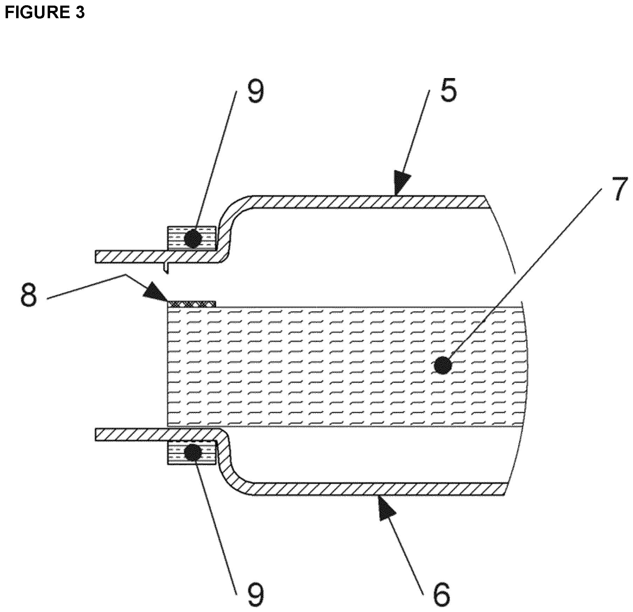

Figure 3 shows the features of an opened thermal compression mould (5 and 6) for making a flange portion in a non-woven mat (7). In this case, the flange portion is made using a preformed flange shape (8) made of the second polymeric material. Heating sources (9) are placed on both sides of the mould to concentrate heat on the flange shape. Alternatively, the flange shape may be heated from one side only. Closing the mould forces the second polymeric material from the flange shape into the space between the fibres of the compressed mat.

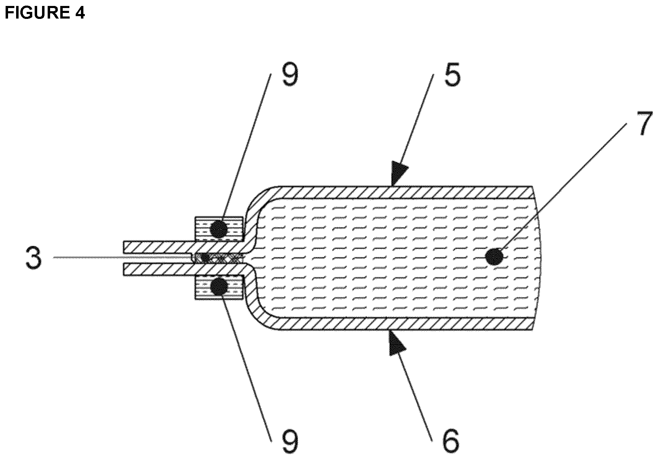

Figure 4 shows the non-woven mat (7) in the enclosed mould with a finished flange portion. The flange portion (3), at the periphery of the mat, comprises the mat's fibres entrapped in a matrix of the second polymeric material. In this case, the surface of the flange portion is flush with the surface of the compressed mat.

Figure 5 shows elevations of the plate sections for use in RBC units (1) described above (e.g. US Patent No. 4165281 (Niigata Engineering Company. Ltd.)). Each plate section contains six installation apertures (2). Flange portions are shown at the periphery (3) of the plate section and at the periphery (4) of the apertures.

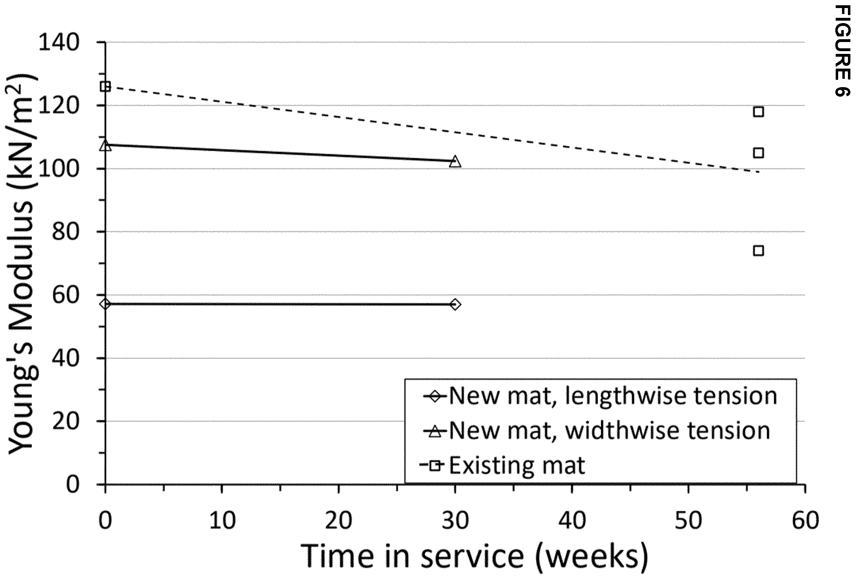

Figure 6 compares the values of Young's modulus of the new and existing mats, before and after a prolonged period of service within a RBC. The objective was to establish the mechanical stability of the mat over a prolonged period of use, subject to typical mechanical stresses and with frequent immersion in water.

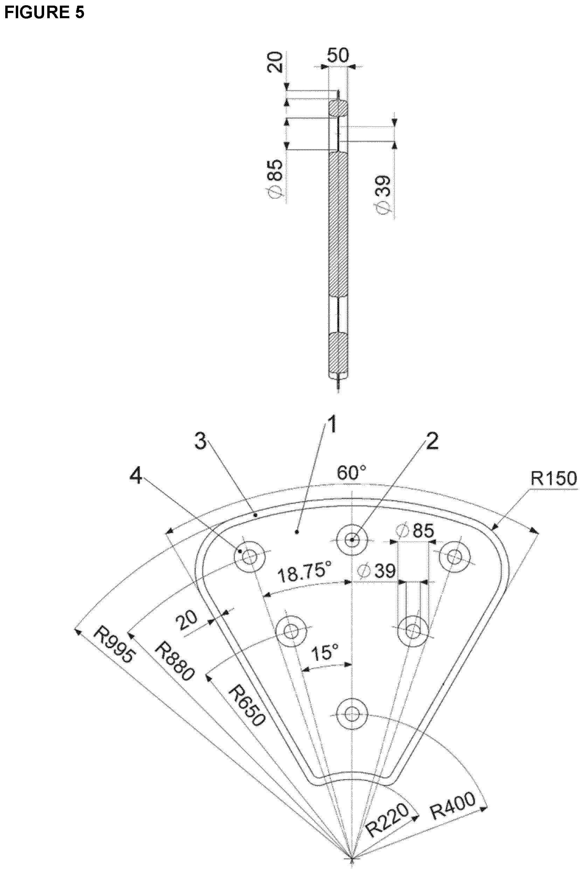

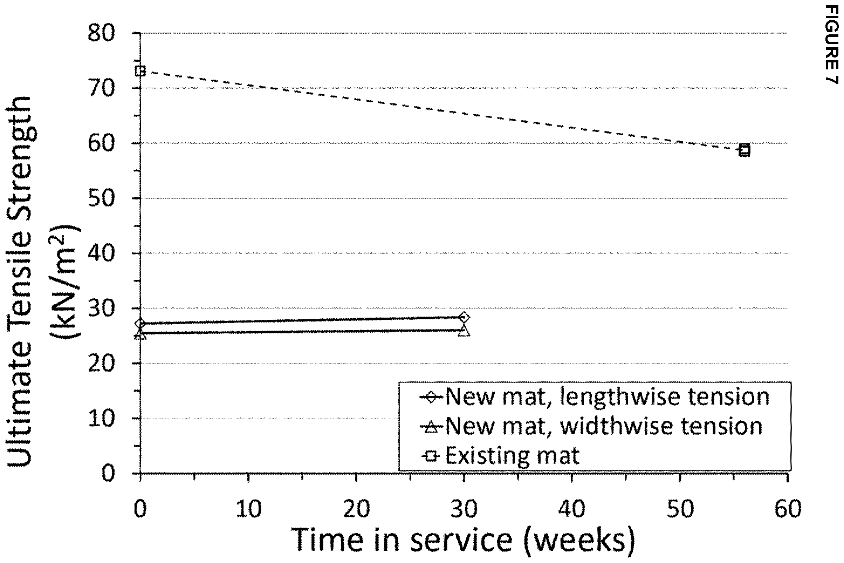

Figure 7 shows the results of tests performed to determine the ultimate tensile strength (UTS) of the existing and new mat, before and after a period in service within a rotating biological contractor (RBC). The objective was to verify that the new mat has a UTS which is sufficient for use within a RBC when formed into plate sections (see Figure 5) and which is stable over a period of several months.

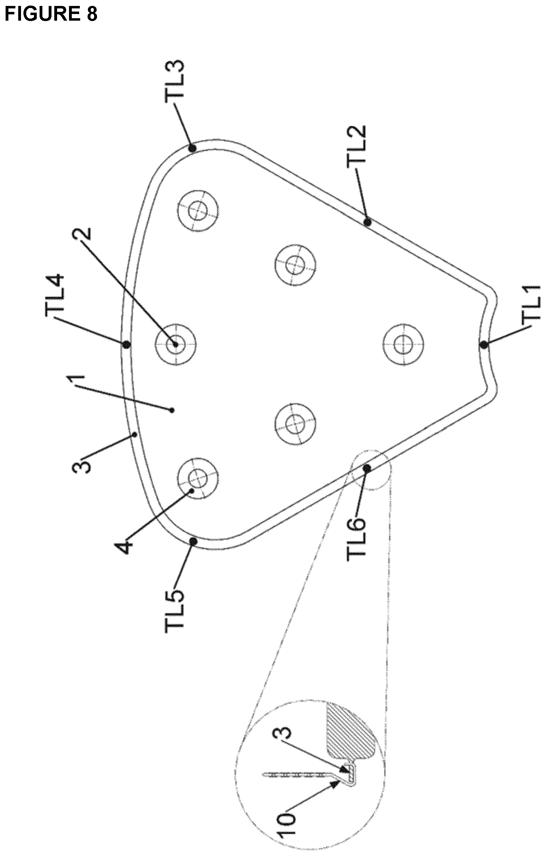

Figure 8 shows Test Locations, TL1 to TL6, used for the stiffness tests, on the peripheral flanges of the new and existing plate sections. The objective was to establish the stiffness of the manufactured plate sections (comprising mat reinforced by formed flange portions).

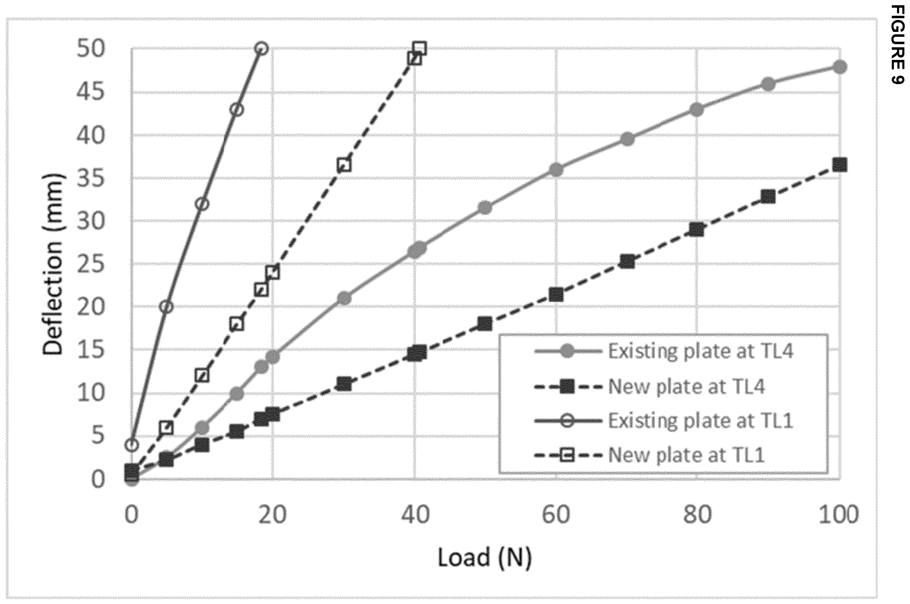

Figure 9 compares the deflections under load of the new and existing plate sections at two of the test locations (TL1 and TL4).

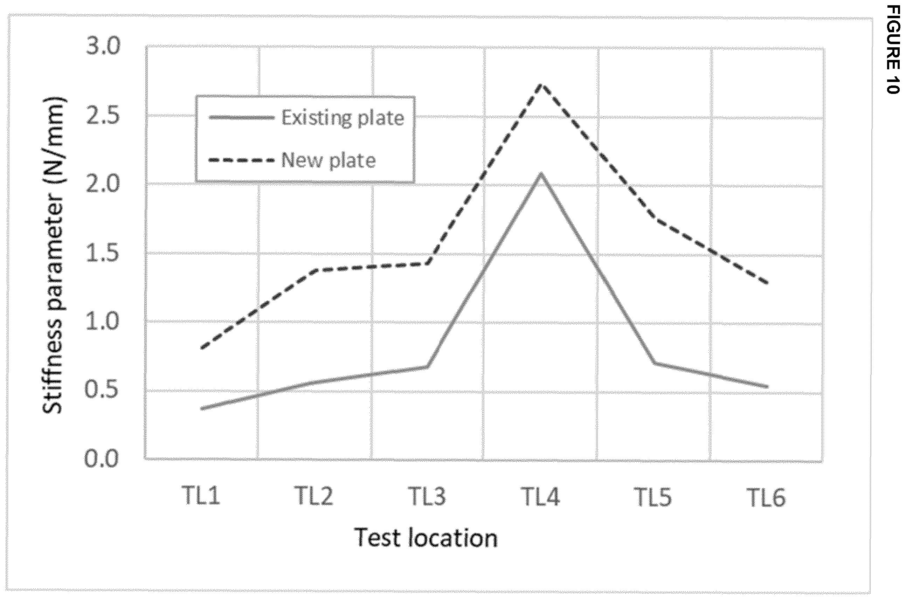

Figure 10 compares values of a stiffness parameter at all test locations. The results indicate that new plate sections have lower deflections under load and are much stiffer than the existing plate sections.

## DETAILED DESCRIPTION

Non-woven mats are found in a wide range of products including cushion fillings, clothing, personal hygiene aids, geotextile membranes, paper and card, insulating materials and filters of various types. Production of such a wide range of products requires non-woven mats with diverse properties and structures, determined by variables such as physical properties of fibres and their polymeric materials, method of fibre laying, bonding between fibres, method of finishing and mat thickness.

By way of example, the improved method of forming flange portions is applied to a spun-inline melt-bonded mat, which is constructed using a method similar to that described in the Asahi Kasei website. The example mat is manufactured directly from a melt of the first polymeric material, which is extruded through a die containing multiple holes. Hole diameter is 0.7 mm, and pitch spacing of the holes is 5 mm. The working face of the die, 80 mm wide by 2 m long, contains 5600 extrusion holes. The multitude of fibres, in the molten state, fall vertically under gravity onto water-cooled rollers which cause the fibres to spiral, above the surface of the water, and fuse at their contiguous surfaces. The bonded mat then falls into the cooling water and onto a submerged conveyor. This inline, continuous process produces long stretches of mats very cost-effectively. Using the improved method described herein, the second polymeric material is then used to form flange portions in the mat described above.

Consider a mat containing a flange portion. The fibres comprise a first polymeric material and the flange portion contains the compacted fibres embedded in a matrix of a second polymeric material, which is a thermoplastic. The method of making flange portions described herein is applicable to any first polymeric material provided the material is not significantly affected, physically or chemically, by the conditions of the thermal compression process used to make the flange portion.

The method of thermal compression, described herein, involves applying a 'process compression pressure' to the flange portion which has been heated to the 'process temperature'.

Figure 3 is an exploded diagram showing, in part, the two halves (5) and (6) of a thermal compression mould used to make flange portions. It also shows the mat (7), the second polymeric material (8) and two heating elements (9). Figure 4 is a diagram showing, in part, the fully enclosed mould containing the flange portion (3).

Figure 4 shows the second polymeric material may be applied to the flange portion in the form of a preformed shape (8), which may be cut from plastic sheet of the required polymeric material and thickness or pre-moulded from the material. Preformed shapes are made to the same plan width as that of the flange portion. Preformed flange shapes are applied to the surface of the flange portion and, to hold them in place, may be glued, preferably using hot melt, to the mat's surface.

The second polymeric material may also be applied to the flange portion in the form of granules spread evenly over the surface of the mat's surface. Granules smaller than the pore size of the mat may fall into the flange portion of the mat, but this does not impair the production and strength of the finished flange portion.

Further, the second polymeric material may be applied to the flange portion of the mat as a hot melt through a lance, preferably driven robotically.

The mould shown in Figures 3 and 4 is heated from both sides, which maximises productivity. The temperature of the heating elements (9) is closely controlled so that the second polymeric material is liquefied, whilst the fibres are not damaged and recover their initial strength after cooling. The conditions and duration of the thermal compression are controlled to obtain the desired effect in the flange portion whilst maximising productivity.

When using one-sided heating, the heating should preferably be applied to the side of the compacted mat not in contact with the second polymeric material, so the second polymeric material is heated through the compacted mat. This type of heating is called herein 'indirect heating'. Such indirect heating improves the flow of melted second polymeric material into the compacted mat and minimises any lateral flow into the open mat outside the flange portion.

Application of the process compression pressure to the flange portion should preferably be delayed until the temperature of the second polymeric material has reached process temperature.

The second polymeric material practically fills the space between the fibres of the first polymeric material in the flange portion, which maximises the strength and stiffness of the portion. The $F_v$ value of the finished flanged portion is greater than 0.85. Experience indicates that the minimum thickness, Tm (mm), of preformed flange shapes needed to fill the space is related to the initial volumetric solid fraction, $F_v$, and thickness, T (mm), of the mat, as follows:

$$Tm \approx T\,F_v \qquad\qquad \text{(Equation 2)}$$

Similarly, the thickness, Tf, of such flange portions is given by:

$$Tf \approx 2\,T\,F_v \qquad\qquad \text{(Equation 3)}$$

Consider a mat with $F_v$ and T values of 0.06 and 50 mm respectively. Equation 2 indicates 7m has a value of approximately 3 mm, so flange shapes may be cut, in this case, from standard plastic sheet of this thickness. Equation 3 indicates Tf has a value of approximately 6 mm.

Flange portions, which protrude from the surface of the compressed mat, may be made using preformed flange shapes of increased thickness. To obtain the thickness of the preformed shape required, the thickness Tm is increased by the required height of the protruding part of the flange portion. Protruding flange portions are heated indirectly through the compressed mat so that the protruding part of preformed flange shape is unaffected by the thermal compression.

Characterisation of Tested Mats

By way of example, the invention is applied to the production of RBC plate sections with the shape and dimensions shown in Figure 5. These plate sections, and samples of mat cut from the plate sections, were tested and the results discussed below with reference to Figures 6 and 7. The first and second polymeric materials consist of a thermoplastic polyester elastomer (TPE) and a low melting-point polyethylene (LMPPE), respectively. Based on their densities, the two polymers fall into the categories of TPE and LDPE; more specifically TPC-ET (thermoplastic copolyester elastomer) and MDPE Lumicene® Supertough 22ST05.

The mat for the plate section was spun-inline from a melt of the TPE using a method similar to that described in the Asahi Kasei website. The mat is 50 mm thick and has a $F_v$ value of 0.057. The fibres are continuous and have an average diameter of 0.75 mm. The flange portion is 5.7 mm thick, made using 3 mm thick preformed shapes.

Process temperature and process compression pressure used to make the flange portion were 125°C and 1.2 MPa, respectively. For comparison, the melting-point temperatures of the TPE and LDPE are 205°C and 113°C, and their densities are 1190 kg/m$^3$ and 921 kg/m$^3$, respectively. The Vicat A50 softening temperature of the TPE is 180°C.

Testing of Mats and Plate Sections

RBC plate sections made using the method described herein are compared in term of strength and flexibility against purchased plate sections made using the method described in JP Patent Application No. 2007 301511 (A) and Korean Patent No. 10 1019069. To a good approximation, both types of plate sections have the dimensions and shape given in Figure 5.

Purchased plate sections are called herein 'existing plate sections'. Plate sections made using the invention herein and that are subject to tests described here are as described above under "Characterisation of Tested Mats" and are called 'new plate sections'. Similarly, the mats, used to make the plate sections are called the 'existing mat' (ie those purchased) and the 'new mat' (ie as described above under "characterisation of Tested Mats".

The drawing given in Figure 5 shows the plate section (1), the six fixing apertures (2), the peripheral flange portions (4) around the fixing apertures, and the peripheral flange portion (3) around the plate section. The flange portions in the two types of plate sections vary in thickness. Flange portions in existing plate sections are approximately 4 mm thick, whereas portions in new plate sections are 5.7 mm thick, which is the thickness obtained by using the minimum thickness, Tm, of the second polymeric material.

Whereas the new mat is a spun-inline melt-bonded type, the existing mat is an air-laid adhesive-bonded type. The table given in the appendix lists the main features of the main types of non-woven mats. The existing mat is of the type given in the 2$^{nd}$ column from the left of this table, and the new mat is of the type given in the right-hand column of the table.

Table 1 compares the physical and chemical properties of the new and existing plate sections. Compared to the existing mat, the new mat has a higher $F_v$ value (0.057 against 0.04) but a lower overall density (53 kg/m$^3$ against 68 kg/m$^3$), owing to the lower density of the fibre of the first polymeric material.

**Table 1: Properties of mats and flange portions compared in tests**

| Property | Unit | New sections | Existing sections |
|---|---|---|---|
| First polymer | - | TPE (Hytrel® 5526 - Dupont) | Saran® |
| Second polymer | - | LDPE (Lumicene® Supertough 22ST05) | Not applicable |
| Fibre diameter (first polymer) | mm | 0.65 to 0.80 | 0.58 |
| Density of first polymer | kg/m$^3$ | 1190 | 1700 |
| Density of second polymer | kg/m$^3$ | 921 | Not applicable |
| Mat thickness | mm | 62 | 50 |
| Mat density | kg/m$^3$ | 53 | 68 |
| Volumetric solid fraction content of mat, $F_v$ | fraction | 0.057 (preferred) | 0.04 |
| Mat bonding | - | Thermal | Adhesive |
| Bonding of flange portions | - | Matrix entrapment | Thermally moulded |
| Thickness of flange portions | mm | 5.7 | 3.5 - 4.5 |

(continued)

| Property | Unit | New sections | Existing sections |
|---|---|---|---|
| Void of flange portions | fraction | < 0.05 | 0.4 to 0.5 |

Tests were performed on the new and existing mat and plate sections to establish the mechanical characteristics of the mat and the effectiveness of the flanged sections at providing a stiffening effect when the mat is formed into the plate sections.

Samples of existing and new mat were tested to establish the Young's modulus (YM) and Ultimate Tensile Strength (UTS). YM is a measure of dimensional stability, with higher numbers indicating a more dimensionally-stable material and low numbers indicating a more elastic material. UTS is a measure of the resistance of the material to failure under tension, with higher numbers indicating a stronger material.

The mat samples were cut from manufactured plate sections. These tests were carried out first on samples from unused plate sections and then on plate sections which had been used in a rotating biological contactor for at least 30 weeks. The objective was to compare the values of YM and UTS of the two mats and to determine the effect of a long period of use.

Samples of whole plate sections made using the existing and new methods were tested to compare the resistance of the existing and new plate sections to deflection under load. A stiffness parameter is defined for the comparison.

**Comparison of mechanical strength and stability**

As indicated in Table 2, six new plate sections and six existing plate sections were tested. The plate sections were installed in a full-scale operational RBC for 30 weeks.

Four samples cut from the new plate sections and four samples from the existing plate sections were used for measuring the Young's Modulus (YM) before and after a prolonged period of use in a full-scale RBC. Further tension was then applied to measure the ultimate tensile strength (UTS).

For these tests, rectangular test samples were cut from the plate sections. Each sample was 100 mm wide by 300 mm long, and one of the 100 mm edges consisted of part of the flange portion around the plate's periphery. The other 100 mm edge was filled with epoxy resin to give a solid strip 25 mm wide and 50 mm thick, allowing it to be clamped securely for testing without distorting the fibres.

The new mat is formed by a process involving spun-inline linear extrusion and melt-bonding and therefore has different tensile characteristics along the length of the mat, compared to across the width of the mat. Plate sections were cut as described above to create two samples in which the mat was aligned length-wise and two samples in which the mat was aligned width-wise, for separate analysis. The existing mat is formed in a non-directional process (air-laid with adhesive bonding) and its tensile characteristics are similar in all directions.

**Table 2: Samples of plate sections used to determine mechanical stability of the mat**

| Plate sections | Sample ref. | Orientation of mat | Time in operation (weeks) | Breaking load (N) | Extension at breaking load (%) | UTS (kN/m$^2$) | YM (kN/m$^2$) |
|---|---|---|---|---|---|---|---|
| New | A06L | Length | 0 | >168 | >100% | >27.2 | 57.2 |
| | A12L | Length | 30 | >175 | >100% | >28.4 | 57.0 |
| | A06W | Width | 0 | 161 | 26.9% | 25.5 | 108 |
| | A12W | Width | 30 | 164 | 29.2% | 26.0 | 102 |
| Existing | B0 | N/A | 0 | 366 | 58.2 | 73.1 | 126 |
| | B1 | N/A | 56 | 293 | 56 | 58.5 | 105 |
| | B2 | N/A | 56 | 293 | 49.7 | 58.6 | 118 |
| | B3 | N/A | 56 | 295 | 79.8 | 59.0 | 74 |

Figure 6, comparing the Youngs Modulus, shows that the new plate section has a similar stiffness to the existing mat in the width-wise direction and a far lower YM (i.e. greater elasticity) in the lengthwise direction, owing to the way in which the fibres forming the mat are laid in a longitudinal direction, but curled, during manufacture of the mat. Importantly, Figure 6 demonstrates that the Youngs Modulus of the new plate section changed little during 30 weeks' use in a RBC, whereas the YM of the existing plate section reduced over a longer period, indicating a reduction in material stiffness over time.

Figure 7 shows that the new plate section has a lower ultimate tensile strength than the existing plate section, but that the strength of the new plate section remains almost constant after prolonged use, whereas the strength of the existing plate section was significantly reduced after use in a RBC. The loads applied during the measurement of UTS were far in excess of those likely to occur within a RBC or similar application of the technology so both materials are considered to have adequate UTS.

All samples from both the new and existing mats failed (at their ultimate respective loads) within the mat rather than at the link between the flange portion and the remaining portion of the mat, indicating that forming flange portions, using the invention described herein or the method described in Japanese Patent Application No.: 2007 301511, produces portions securely attached to the mat.

**Comparison of stiffness**

The other group of tests was performed to compare the deflection and stiffness of new and existing plate sections under load. The tests were performed on whole plate sections.

The test rig comprised a stiff frame containing six bolt-fixing points for securely holding individual plate sections horizontally. Six bolts, with washers of the same outer diameter (85 mm) as the flange portions around the holes, pass through the six fixing holes to secure individual plate sections to the frame.

The new and existing plate sections were immersed in water for 25 days to simulate the effects of any short-term hydrolysis on the strength of the plate sections.

For the tests, six test locations (TLs) were identified at different positions around the outer peripheral flange portion, as indicated in Figure 8. For example, TL4 is on the outer circumference of the peripheral flange portion, and TL1 is diametrically opposite, on the inner circumference.

The stiffness of each section was tested by applying an upward vertical force at each test location, through a chain and catch. As indicated in Figure 8, the catch (10), made from 3 mm-diameter angled stainless steel rod, passes under the flange portion; its design ensures the applied vertical force passes through the centre of the flange portion. The catch did not penetrate or damage the peripheral flange portions of the new or existing plate sections in any of the tests.

Using a conventional tensile-testing machine, the applied upward vertical force was increased from zero until either the applied force reached 100 N or the measured vertical deflection reached a maximum of 50 mm. Since the plate sections are 50 mm thick such a deflection is substantial and would not normally be experienced in practice. The range of applied forces used in the tests was wider than the range experienced by plate sections under normal operating conditions within a RBC or similar device.

In the tests, the applied vertical force is countered by the resisting mechanical stresses in the flange portion and adjoining mat.

Test results have been compared in terms of deflection and stiffness for which a stiffness parameter, S (N/mm), has been derived, as follows:

$$S = F / D \qquad\qquad\qquad \text{(Equation 4)}$$

where F (N) is the applied force and D (mm) is the deflection. Stiffness values relate to either the maximum deflection of 50 mm or the maximum force of 100 N, depending on which condition occurred first.

Figure 9 shows the relationships between deflection and applied force at the two test locations, TL1 and TL4, for both the new and existing plate sections. Under a load of 20 N, the deflection at TL1 was approximately 50 mm for the existing plate section but only 25 mm for the new plate section. Similarly, at TL4, the deflections were approximately 14 mm and 7 mm respectively. Thus, the results indicate that new plate sections resists deflection under load much better than existing plate sections.

Loads as high as 100 N are not practical in normal operation within a RBC. However, under such a high load, the existing and new plate sections deflections at TL4 were 48 mm and 37 mm respectively, confirming that the new plate section has lower deflections under a range of loads.

Figure 10 compares values of the stiffness parameter, S (N/mm), determined from Equation 4 for the new and existing plate sections at all test locations. The results indicate that the new plate is stiffer than the existing plate at all locations. Further, the value of stiffness parameter was highest at TL4 and lowest at TL1. With reference to Figure 8 showing the positions of the test locations and fixing apertures, this result suggests that stiffness is inversely related to the distances between a test location and the fixing apertures.

New plate sections have substantially higher stiffness to counteract deflection from the plane of the plate section, yet they also have greater elasticity within the mat to accommodate a small amount of movement within the plane of the mesh. These characteristics are advantageous in applications such as within a RBC. Importantly, the YM and UTS of the new mat remained constant after prolonged use within a RBC which suggests that the mechanical characteristics will remain consistent over the lifetime of the plate section.

Appendix

The following table lists the main features of different types of non-woven mats.

| Fibre type | Staple | | Spun-inline from melt | | |
|---|---|---|---|---|---|
| Fibre length (mm) | 20 to 200 | | Continuous | | |
| Fibre chemical properties | Natural fibres and thermoplastics | | Thermoplastic | | |
| Fibre diameter ($\mu$m) | 10 - 500 | 10 - 50 | 20 - 50 | < 20 | 100 - 1000 |
| Fibre laying mechanisms | Air-laying or carding of dry fibres | Filtering of wet fibres from slurry | Air jetting of spun fibres | | Water immersion of melted fibres |
| Mat bonding* | G, F, H, N or S | C | F, G or N | A or A + F | M |
| Mat features | Common mats e.g. clothing | High density mats, e.g. paper | Strong and hard wearing | Good loft e.g. cushions | Low fibre content with good rigidity |

Notes: * Methods of mat bonding include:
A = air entanglement,
C = pressure compaction,
G = glued,
F = fused by heating,
H = hydro-entanglement,
M = melt entanglement and fusing,
N = needle punched,
S = stitched

**Claims**

1. A non-woven mat formed from fibres that comprise a first polymeric material, the mat comprises a flange-portion that is of greater density than the remaining portion of the mat and that further comprises a second polymeric material, the second polymeric material is a thermoplastic and has a melting-point temperature that is lower than the melting-point temperature of the first polymeric material.

2. A non-woven mat as claimed in claim 1, wherein the second polymeric material is substantially absent from the remaining portion of the mat.

3. A non-woven mat as claimed in claim 1 or claim 2, wherein the flange portion has a volumetric solid fraction of more than 0.85.

4. A non-woven mat as claimed in any of the previous claims, wherein the melting point temperature of the first polymeric material is 1°C, 2°C, 3°C, 4°C, 5°C, 10°C, 15°C or 20°C, 30°C, 40°C or more, greater than the melting-point temperature of the second polymeric material.

5. A non-woven mat as claimed in any of the preceding claims, wherein the flange portion comprises a matrix comprising the second polymeric material in which fibres of the first polymeric material are entrapped.

6. A non-woven mat as claimed in any of the preceding claims, wherein the flange portion comprises a matrix comprising the second polymeric material in which fibres of the first polymeric material are uniformly distributed and/or randomly distributed.

7. A non-woven mat as claimed in any of the preceding claims, wherein the flange-portion forms a raised surface extending out from the surface of the mat.

8. A non-woven mat as claimed in any of the preceding claims, wherein when the first polymeric material is HMPPE, the second polymeric material is LMPPE; or

> wherein when the first polymeric material is PP, the second polymeric material may be any of LMPPE, HMPPE, or combinations thereof; or
> wherein when the first polymeric material is POM, the second polymeric material may be any of LMPPE, HMPPE, or combinations thereof; or
> wherein when the first polymeric material is TPE, the second polymeric material may be any of LMPPE, HMPPE, PP, POM, or combinations thereof; or
> wherein when the first polymeric material is PBT, the second polymeric material may be any of LMPPE, HMPPE, PP, POM, TPE, or combinations thereof; or
> wherein when the first polymeric material is PA, the second polymeric material may be any of LMPPE, HMPPE, PP, POM, TPE, PBT, or combinations thereof.

9. A non-woven mat as claimed in any of the preceding claims, wherein the non-woven mat is spun-inline and melt-bonded.

10. A non-woven mat as claimed in any of the preceding claims, wherein the fibres comprising the first polymer have average diameters greater than 0.3 mm; and/or

> wherein the fibres comprising the first polymer have average lengths greater than 500 mm; and/or
> wherein the volumetric solid fraction in the remaining portion of the mat is greater than 0.04 and/or less than 0.85.

11. A non-woven mat as claimed in any of the preceding claims, wherein the flange portion is at the periphery of the mat; and/or wherein the flange portion is around the periphery of an aperture in the mat.

12. A non-woven mat as claimed in any of the preceding claims, wherein the flange portion is a rib running through the body of the mat.

13. A non-woven mat as claimed in any of the preceding claims, wherein the flange portion is a fixing fitment.

14. A non-woven mat as claimed in any of the preceding claims, for use as plates in a biological rotating contactor and/or for use in filters, demisters or floating treatment wetlands.

15. A method of forming a flange in a non-woven mat, wherein the method comprises the steps of:

> a. providing a non-woven mat formed from fibres that comprise a first polymeric material and from a second polymeric material;
> b. heating the first and second polymeric materials to a process temperature that is higher than the melting-point temperature of the second polymeric material and lower than the melting-point temperature of the first polymeric material, and;
> c. compressing a portion of the non-woven mat so that the portion of the non-woven mat forms a flange-portion.

**FIGURE 1**

**FIGURE 2**

**FIGURE 3**

**FIGURE 4**

**FIGURE 5**

**FIGURE 6**

**FIGURE 7**

**FIGURE 8**

**FIGURE 9**

**FIGURE 10**

## EUROPEAN SEARCH REPORT

**Application Number**

EP 24 20 5088

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/025636 A1 (FORMFLEKS OTOMOTIV YAN SANAYI VE TICARET ANONIM SIRKETI [TR]) 11 February 2021 (2021-02-11) * claims 1, 4, 8; figure 2 * | 1,7,11, 13,15 | INV. D04H1/541 D04H1/55 C02F3/08 C02F3/10 |
| Y,D | JP H01 23594 Y2 (KYOKUSUI PLANNING CO. LTD.) 19 July 1989 (1989-07-19) | 1,3-15 | C02F3/32 B01D39/16 |
| A | * claim 1; figure 1 * | 2 | B01D45/12 |
| Y | EP 2 634 300 A1 (FAIRTECH INVEST LTD [CN]) 4 September 2013 (2013-09-04) * paragraph [0001]; claim 1 * | 1,3-15 | |
| A,D | JP 2007 301511 A (IKECHI HIROMI) 22 November 2007 (2007-11-22) * claim 1 * | 1-15 | |

**TECHNICAL FIELDS SEARCHED (IPC)**

D04H
C02F
B01D

The present search report has been drawn up for all claims

| Place of search | Date of completion of the search | Examiner |
|---|---|---|
| Munich | 10 March 2025 | Saunders, Thomas |

EPO FORM 1503 03.82 (P4C01)

## ANNEX TO THE EUROPEAN SEARCH REPORT
## ON EUROPEAN PATENT APPLICATION NO.

EP 24 20 5088

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2025

| Patent document cited in search report | | | Publication date | Patent family member(s) | | | Publication date |
|---|---|---|---|---|---|---|---|
| WO 2021025636 | A1 | | 11-02-2021 | EP | 4010227 | A1 | 15-06-2022 |
| | | | | WO | 2021025636 | A1 | 11-02-2021 |
| JP H0123594 | Y2 | | 19-07-1989 | JP | H0123594 | Y2 | 19-07-1989 |
| | | | | JP | S6133696 | U | 28-02-1986 |
| EP 2634300 | A1 | | 04-09-2013 | AU | 2011316366 | A1 | 11-04-2013 |
| | | | | BR | 112013009136 | A2 | 08-10-2019 |
| | | | | CA | 2781401 | A1 | 19-04-2012 |
| | | | | CN | 102575396 | A | 11-07-2012 |
| | | | | CO | 6700875 | A2 | 28-06-2013 |
| | | | | EP | 2634300 | A1 | 04-09-2013 |
| | | | | HK | 1170781 | A1 | 08-03-2013 |
| | | | | JP | 6263579 | B2 | 17-01-2018 |
| | | | | JP | 2013544974 | A | 19-12-2013 |
| | | | | JP | 2017008475 | A | 12-01-2017 |
| | | | | KR | 20130109153 | A | 07-10-2013 |
| | | | | KR | 20160106196 | A | 09-09-2016 |
| | | | | MX | 344167 | B | 07-12-2016 |
| | | | | MY | 183762 | A | 11-03-2021 |
| | | | | US | 2013193063 | A1 | 01-08-2013 |
| | | | | WO | 2012048545 | A1 | 19-04-2012 |
| | | | | ZA | 201303459 | B | 30-07-2014 |
| JP 2007301511 | A | | 22-11-2007 | JP | 4309408 | B2 | 05-08-2009 |
| | | | | JP | 2007301511 | A | 22-11-2007 |
| | | | | KR | 100765142 | B1 | 10-10-2007 |

EPO FORM P0459

For more details about this annex : see Official Journal of the European Patent Office, No. 12/82

## REFERENCES CITED IN THE DESCRIPTION

**Patent documents cited in the description**

- US 4165281 A
- JP 2007301511 A
- JP H113600 Y
- JP H116559 Y
- JP H123594 Y
- JP 3064723 U
- KR 101019069
- US 1811181 A